Europäisches Patentamt

(19) European Patent Office

Office européen des brevets

(11) Publication number: **0 162 349**

**A2**

(12) **EUROPEAN PATENT APPLICATION**

(21) Application number: **85105240.7**

(22) Date of filing: **30.04.85**

(51) Int. Cl.⁴: **G 11 B 5/596**
**G 11 B 21/10**

(30) Priority: **24.05.84 US 613943**

(43) Date of publication of application:
**27.11.85 Bulletin 85/48**

(84) Designated Contracting States:
**DE FR GB IT**

(71) Applicant: **International Business Machines Corporation**
**Old Orchard Road**
**Armonk, N.Y. 10504(US)**

(72) Inventor: **Best, John Steward**
**1060 South Winchester Bldv Apt 14**
**San Jose California 95128(US)**

(72) Inventor: **Romankiw, Lubomyr Taras**
**7 Dunn lane**
**Briarcliff Manor New York 10510(US)**

(72) Inventor: **Scranton, Robert Alan**
**Twin Lakes Road**
**South Salem New York 10590(US)**

(72) Inventor: **Thompson, David Allen**
**Twin Lakes Road**
**South Salem New York 10590(US)**

(74) Representative: **Ekström, Gösta E.**
**IBM Svenska AB Patent Operations Box 962**
**S-181 09 Lidingö(SE)**

(54) **A data recording medium.**

㊷ A data recording medium including a structure providing variable electromagnetic property (variable, resistance, capacitive, or other variable impedance or other variable electromagnetic property) contrast on the surface marking servo tracks. Such media include magnetic or optical storage disks and tapes. The media can be conductive metallic or nonmetallic and can be composed for example of poorly conductive media, dielectric media, or semiconductive media. The variable electromagnetic impedance can vary in the optical, electrical or other portions of the electromagnetic spectrum. A very small variation of the thickness of the protective layer above the magnetic recording medium is employed to mark the servo track information of the medium.

Information to be detected by means of a capacitive sensor can be recorded in the protective layer above or below the magnetic recording or optical storage medium. For example, a thin film metallic protective layer 0.07 micrometers thick can be patterned with about 0.02 micrometers of the protective layer. For a plated disk, the top 0.02 micrometers of the protective layer can be patterned.

A pattern for providing a variable impedance for representing data can be formed subtractively by sputter etching, or additively formed by a lift-off process or by deposition through a mask, or by the oxidation of or nitriding of materials such as Al, Si or valve metals.

EP 0 162 349 A2

0162349

# A DATA RECORDING MEDIUM

The present invention relates to data storage media and more particularly to patterning such media to provide servo control information on the media concurrently with maximum storage density and optimal accuracy of the servo system utilized to position the magnetic recording heads which read the data on the media.

Heretofore, magnetic recording disk files have incorporated tracks for providing positioning information to a servo system which guides and controls the position of magnetic recording heads above the disk files as they search for the location where the data to be read is located. The servo system receives signals from a servo data sensor as it follows any selected one of a plurality of concentric magnetic recording tracks on the disk. Then the servo holds the head centered above such a selected recording track which contains data stored in the form of magnetic records on the disk files.

Some magnetic disk files use a separate portion of the disk surface and a separate head (the servo head) on that surface for magnetically storing positioning information which provides the track location information followed by the servo system. In such files where there are a number of recording heads, all other recording heads are mechanically ganged to the servo head so that when the electronic servo system holds the servo head centered above a servo track, all other recording heads are approximately centered above their respective data tracks.

Disadvantages of such dedicated magnetic servo tracks are, first, that each such track requires space on the magnetic disk, which precludes use of that space to store other data and secondly, that the track is "spaced away" from the data track. Thus, the mechanical alignment of the magnetic heads under servo control is less accurate than if the servo data were stored in alignment with the data track. Such "spacing away" introduces mechanical misalignments which yield errors in track following ability. This is a particular problem as economic trends dictate that magnetic disk files must have higher and higher track densities concomitantly with a requirement for higher performance servo systems.

Another system of storing servo information on the magnetic disk is the "sector servo" system in which the servo information on the disk indicating track locations is stored in sectors of the disk file which are interspersed (i.e. inserted at spatial intervals along a circular track on the disk) around the surface of the disk. The servo information is stored between sectors in which data is stored.

The advantage of the sector servo system is that the servo information is stored at the same track radius from the center of the disk as the data tracks containing the information to be read or which will contain the information to be stored by the head which is being controlled by the servo system. Thus since the track and the servo data are equal radial distances from the center of the disk, "spacing away" errors described above are eliminated.

A disadvantage of the sector servo system is that like the concentric track system above, it uses up an area of the magnetic disk surface for the storage of the servo control information which then cannot be used to store data. Thus it reduces the amount of space on the magnetic surface of the disk which can be employed to store data magnetically. A second disadvantage to the sector servo system is that mechanical vibrations at frequencies above one-half the rate at which the sectors pass the head are not controlled effectively by the servo system.

Still another servo data storage system is the "buried servo" track in which the servo information is placed magnetically in the data disk, either in, below, or above the data containing layer - without reducing the data storage capacity of the data surface, usually by employing a recording medium other than a magnetic medium to store the servo data.

A number of such embedded servo systems have been proposed including magnetic, optical, and capacitive types. Capacitive servo techniques offer some advantages in implementation and detection, but embedded capacitive servo schemes are generally limited to dielectric magnetic media such as sputtered gamma $Fe_2 O_3$ because metallic magnetic films shield a capacitive sensor from a capacitive servo pattern lying beneath the magnetic layer. Because of increasing interest in media such as thin magnetic films for higher density horizontal as well as vertical recording, a new servo system is needed.

Capacitive position signal schemes require a method of placing a pattern on a disk or tape which can be sensed capacitively. Such a scheme must be compatible with the magnetic media and must not affect flying or stop/start performance adversely.

Copending U. S. patent application Ser. No. 06/494,743 filed May 16, 1983 of Krongelb, Romankiw, Scranton, and Thompson for a "Structure to Provide Optical and Capacitive Contrast on Magnetic Recording Disk" describes a method of placing a pattern with optical and capacitive contrast beneath a dielectric medium, such as a particulate medium or sputtered iron oxide. However that method is less advantageous with metallic conductive media which is both opaque to light and shields the capacitive sensor from the pattern capacitively.

- 4 -

0162349

An alternate process is to remove the metallic medium in patterns in the form of dots, guard bands, a spiral or spirals, or other shapes so that the physical pattern of the medium itself can be sensed. Clearly, a problem with this is that magnetic data cannot be recorded on the portions of the disk where the medium has been removed, so the data recording density is reduced when this technique is employed.

The invention as claimed is intended to remedy theabove mentioned drawbacks.

The system of this invention provides a disk file with servo information stored by an extremely thin variable thickness layer providing a variable electromagnetic property such as variable capacitance which produces a contrast indicative of position. Signals in the form of changes in capacitive value are built into conductive metallic media for magnetic disks and tapes by a small amount of modulation of the thickness of the protective layer above the magnetic recording medium.

Servo control systems for magnetic recording head drives require a method of placing a pattern on disk or tape units which can be sensed by means of a transducer such as a capacitive transducer. The pattern must be built into the units in a way which is compatible with the magnetic recording medium employed.

Here the information to be detected by means of a capacitive sensor is recorded in the protective layer above the magnetic recording medium. For example, a thin film metallic protective layer 0.07 micrometers thick can be patterned with about 0.02 micrometers of the protective layer. For a plated disk, the top 0.02 micrometers of the protective layer can be patterned.

The pattern of the capacitive data can be formed subtractively by sputter etching, or additively formed by a lift-off process or by deposition through a mask. Alternatively, it can be done by anodization of a readily anodizable metal.

In the worst case, the effective magnetic flying height can be increased very slightly.

This system achieves capacitive contrast for markings indicative of the position on the disk or other medium providing signals on conductive metallic media for magnetic disks and tapes. The markings comprise very small amounts of modulation of the thickness of the protective layer above the magnetic recording medium.

Alternatively, the capacitive contrast pattern can be stored in the protective layer above the magnetic media by a planar film. The planar film is composed of at least two materials with different dielectric constants or resistivities.

A variety of electromagnetic sensors can be employed to detect the contrast patterns described below. Variations in height provide a phase contrast to an electromagnetic sensor, while variations in resistivity or dielectric constant provide changes in attenuation and impedance. The electromagnetic sensors include sensors adapted to detect eddy current infrared, optical and microwave electromagnetic energy, although a capacitive sensor is preferred in general because of the ease of incorporation of the sensing element-a thin metallic film in the construction of a magnetic read/write system.

The foregoing and other objects, features and advantages of the invention, which is defined the attached claims, will be apparent from the more particular description of the preferred embodiments of the invention, as illustrated in the accompanying drawings, in which; —

FIG. 1 is a section of a magnetic recording disk to which a servo track is to be added as illustrated by FIGS. 2-6, in accordance with this invention.

FIG.2 shows the disk of FIG. 1 after a protective layer has been added to the upper surface thereof.

FIG. 3 shows the disk of FIG. 2 after it has been processed to add a temporary masking layer.

FIG. 4 shows the disk of FIG. 3 after it has been processed by etching away some or all of the protective layer added in the process step associated with FIG. 2.

FIG. 5 shows the disk after remaining masking material is removed, leaving the pattern etched in the protective layer during the process step associated with FIG. 4.

FIG. 6 shows the result of adding of an oxidized uniform surface layer to the upper surface of the resulting structure of FIG. 5.

FIG. 7 is a sectional view of the disk of FIG. 1 with the addition of an etch stop layer on top of the magnetic recording medium prior to addition of the servo track, as illustrated by FIGS. 8-12.

FIG. 8 shows the disk of FIG. 7 after a protective layer has been added to the upper surface thereof.

FIG. 9 shows the disk of FIG. 8 after it has been processed to add a temporary masking layer.

- 7 -

0162349

FIG. 10 shows the disk of FIG. 9 after etching away some or all of the protective layer added in the process step associated with FIG. 8.

FIG.11 shows the disk of FIG. 10 after remaining masking material is removed leaving the pattern etched in the protective layer.

FIG. 12 shows the result of adding of an oxidized uniform surface layer to the upper surface of the resulting structure of FIG. 11.

FIGS. 13-18 are analogous to FIGS. 1-6 where the magnetic media is applied to the upper surface of the structure at the end of the process rather than at the beginning.

FIG. 19 is a modification of FIG. 18 with a buried metallic servo track with the magnetic media very thick with respect to the patterned metallic layer. Top surface height variations are detectable by capacitive sensors.

FIG. 20 is a modification of FIG. 18, but as no oxidized uniform surface layer has been used. The height of the magnetic media is variable.

FIG. 21 is similar to FIG. 6 or FIG. 12 except that the planarization of the top surface is provided by the disk lubricant.

FIG. 22 shows a variation of the disk structure shown in FIG. 21, with a thick upper protection layer of chromium patterned in reverse with sputter-etched depressions with no coating on top.

FIG. 23 shows a modification of FIG.22, with the substrate, metallic undercoat, magnetic layer, and a dielectric layer of silicon dioxide, $Si_3N_4$, or sputtered carbon, patterned by very shallow etched depressions.

FIG. 24 shows a modification of FIG.23, with a layer of an etch stop material, covered by a pattern of coded indicia marked by sputtered carbon markings covered by a lubricant layer which planarizes the structure.

In the drawings, like elements are designated with similar reference numbers, and identical elements in different specific embodiments are designated by identical reference numbers.

A structure provides variable electromagnetic impedance (variable resistance, capacitive, or other variable electromagnetic or impedance value) contrast on the surface marking servo tracks on data storage media. Such media include magnetic or optical storage disks and tapes. The media can be conductive metallic or nonmetallic and can be composed for example of poorly conductive media, dielectric media, or semiconductive media. The variable electromagnetic impedance can vary in the optical, electrical or other portions of the electromagnetic spectrum. A very small variation of the thickness of the protective layer above the magnetic recording medium is employed to mark the servo track information of the medium.

Information to be detected by means of a capacitive sensor can be recorded in the protective layer above or below the magnetic recording or optical storage medium. For example, a thin film metallic protective layer 0.07 micrometers thick can be patterned with about 0.02 micrometers of the protective layer. For a plated disk, the top 0.02 micrometers of the protective layer can be patterned.

A pattern for providing a variable impedance for representing data can be formed subtractively by sputter etching, or additively formed by a lift-off process or by deposition through a mask, or by the oxidation of or nitriding of materials such as Al, Si or valve metals.

This system provides a variable electromagnetic value such as variable capacitive reactance or other variable impedance contrast for position signals on conductive metallic media for magnetic disks and tapes by means of a very small amount of modulation of the thickness of the protective layer above the magnetic recording medium. Optionally, the protective layer may be planarized by subsequent oxidation, or the use of an additional layer.

In accordance with this invention, a disk is formed by means of a series of additive and subtractive process steps. Further, the process may be improved such that the planarized combination of the protective layers and overcoat are formed from one deposition stop. Such a process is described below:

1) Deposit metallic magnetic medium on prepared substrate, as is well known in the state of the art listed as follows:

a) K.Nakamura, Y.Ohta, A.Itoh, C. Hayashi, IEEE Trans. Mag., Vol 18, 1077-1079 (1982);

T. Wielinga, J.C. Lodder, J. Worst, IEEE Trans Mag. Vol 18, 1107-1109(1982);

Y. Suganuma, H. Tanaka, M. Yanagisawa, F. Goto, S. Hatano IEEE Trans. Mag. 'Vol. 18, 1215-1220 (1982).

2) Deposit a layer of Si, Cr, Al or of a valve metal;

3) Selectively mask predetermined portions of the layer of Si, Cr, Al or valve metal with photoresist with the photoresist having the desired capacitive servo pattern developed in it. The photoresist can be an X-ray or electron beam sensitive material as well.

4) Partially etch the layer of Si, Cr, Al, Rh, Ir, Os, or valve
metal through the openings in the mask.

One could stop at this point. The patterned surface topography
provides a capacitive signal for position measurement. Correspondingly, the surface provides an optically sensed signal
through phase contrast.

5) Oxidize the layer of Si, Cr, Al or valve metal through the
openings in the mask. Oxidation may be aqueous, or organic anodic
electrochemical, thermal or oxygen plasma assisted. The proper
depth of partial etching, in combination with the increase in film
thickness due to oxidation, will planarize the surface.

One could perform step (5) immediately after step (3). However,
in that case, one would not achieve planarization.

6) The masking material is removed (optional) by means of an appropriate solvent for the resist used in the operation (acetone
when using azide (AZ) type resist, and an appropriate solvent when
using PMMA or other resists.)

7) The entire surface may be uniformly oxidized to provide an (optional) uniform surface. Capacitive contrast is achieved by the
variations in resistivity and dielectric constant in different
regions which occur through the patterned selective etching and
oxidation process. The pattern may be detected optically as the
material properties of resistivity and dielectric constant in the
optical range are more commonly known as optical absorption and
index of refraction.

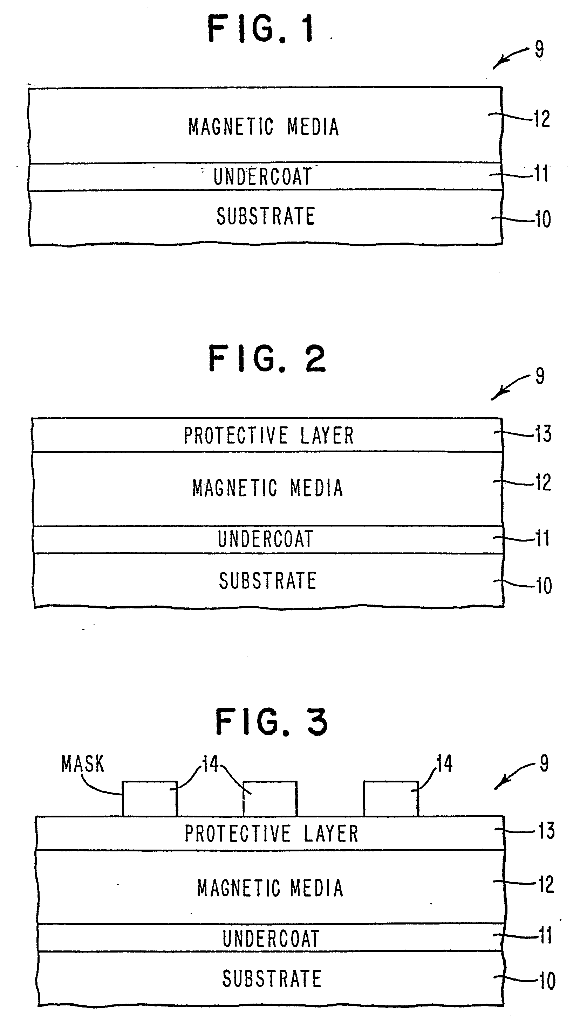

The following description relates to an implementation of the seven process steps listed above. A magnetic recording disk 9 of the conventional sort is shown in FIG. 1, ready for processing of a servo track onto disk 9 in accordance with this invention. The substrate 10 which is composed of AlMg alloy is coated with an undercoat layer 11 composed of an NiP alloy. The undercoat supports the magnetic recording medium layer 12 composed of CoCr, CoPt, CoP, or CoNiP, which is applied in accordance with process step (1) above.

In FIG. 2, the disk 9 of FIG. 1 is coated with a protective layer 13 is deposited onto magnetic media layer 12 of disk 9, in accordance with process step (2) above. Layer 13 is composed of one of several materials (such as Si, Al or a valve metal) selected from the group consisting of Ni, V, Ta, Ti, Zr, Hf, Cr, Mo, W, Mg, Si, Al, Rh, Ir, Os, or alloys thereof. This layer protects magnetic media layer 12 from corrosion and wear. This is important because the magnetic film is extremely thin and would be strongly affected by loss of material to corrosion and wear. Also, a magnetic recording head reads and writes data when it is in close proximity to the media and the surface of the head would be deleteriously affected by wear products. The protective layer 13 allows alternate choices for protection from wear and corrosion than the limited materials available for layer 12, which are chosen for magnetic properties.

FIG. 3 shows the disk 9 of FIG. 2 with a mask layer 14 composed of a resist such as photoresist, x-ray resist, or electron beam resist which is patterned in accordance with the pattern of the ultimate capacitive structure to be etched into the disk 9, in accordance with step (3) above. The mask layer 14 is applied selectively to provide the desired capacitive pattern to be formed by etching of the protective layer 14. The photoresist is composed of AZ Shipley resist or PMMA, preferably. Mask 14 includes grooves or openings 17 through which protective layer 13 is par-
-tially etched in step (4) above.

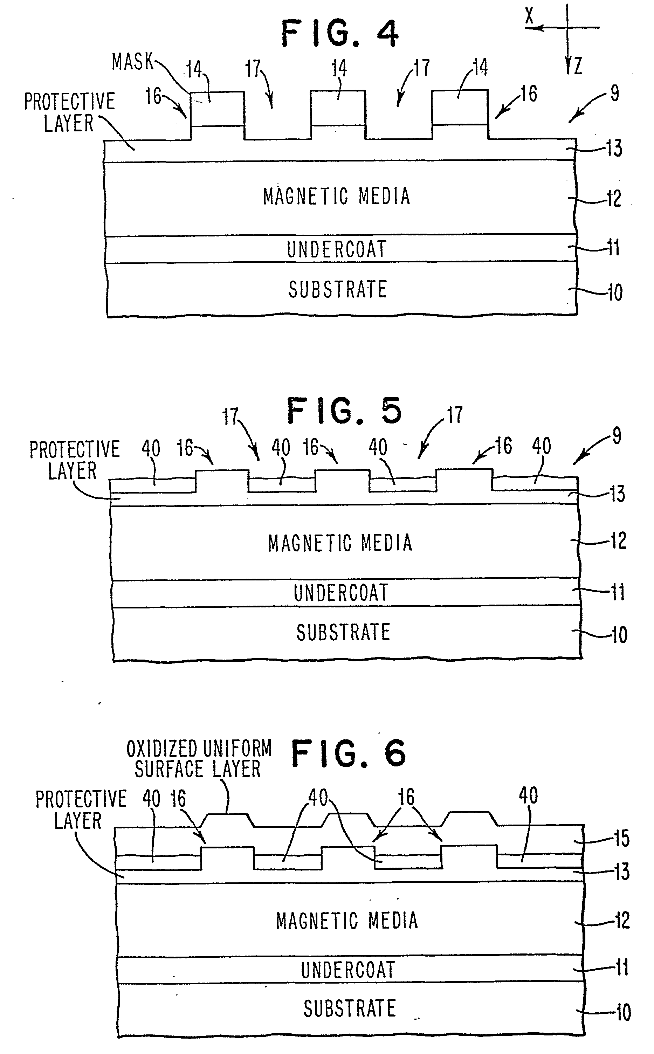

FIG. 4 shows the disk 9 of FIG. 3 after the protective layer 13
has been partially etched from above along the z axis down into
the layer 13 by etching through the openings 17 in the mask 14, as
described in process step (4) above.

Next in process step (5) the surfaces of layer 13 which are not
protected by mask 14 (i.e.in grooves or openings 17 in mask 14)
are exposed to oxidization by an atmosphere of oxygen plasma, by
aqueous solution or by an organic anodization solution.

The oxidation results in oxidized layer 40 which increases the volume at the exposed openings 17 of layer 13, as it converts metal
in layer 13 to a metal oxide as this process increases the distance between the metal atoms by inserting oxygen atoms in between
metal atoms.

As an alternative in this step, one can oxidize partially. While
it is possible to use the magnetic disk file as produced thus far,
it is preferable to process it further as shown in connection with
FIG. 5 for better performance characteristics.

FIG. 5 shows the disk 9 of FIG. 4 after the resist mask 14 has been
removed from the protective layer 13 as in process step (6) above,
exposing the encoded markings 16 formed by the remaining portions
of protective layer 13, which along with the grooves 17 between
markings 16 provide variations in dielectric constant with dimensions along the z axis on the order of 0.02 micrometers.
Oxidation provides better protection and may produce a smoother
surface.

FIG. 6 shows the disk 9 of FIG.5 after disk 9 has been treated by further oxidizing of the material of the protective layer 13 (with oxidation occurring through layer 40 where it exists) to form an oxidized, uniform-surface layer 15, as described in process step (7) above. This is done because the oxidized layer 15 provides the actual wear surface of the layer 13. Layer 40 and layer 15 are composed of the same material, but the thickness of the layer 40 plus the layer 15 is greater than the thickness of layer 15, where layer 40 is absent. Layer 40 is formed only in the openings in mask 14.

Alternatively, to the process of steps 1-6, the process can be performed in much the same way with the difference that the etching step is controlled by a stop layer.

STOP LAYER

During the selective etching or oxidation of the patterned layer, it is highly desirable that the magnetic media should not be etched. Etching or oxidation of the magnetic media may lead to variation in the magnetic recording properties of the media. In effect, the capacitive contrast pattern may be sensed magnetically, with deleterious effects on the magnetic read-write system. Although such a system may still function, it is preferable that the magnetic layer should neither be etched nor oxidized to produce a capacitive servo pattern thereon.

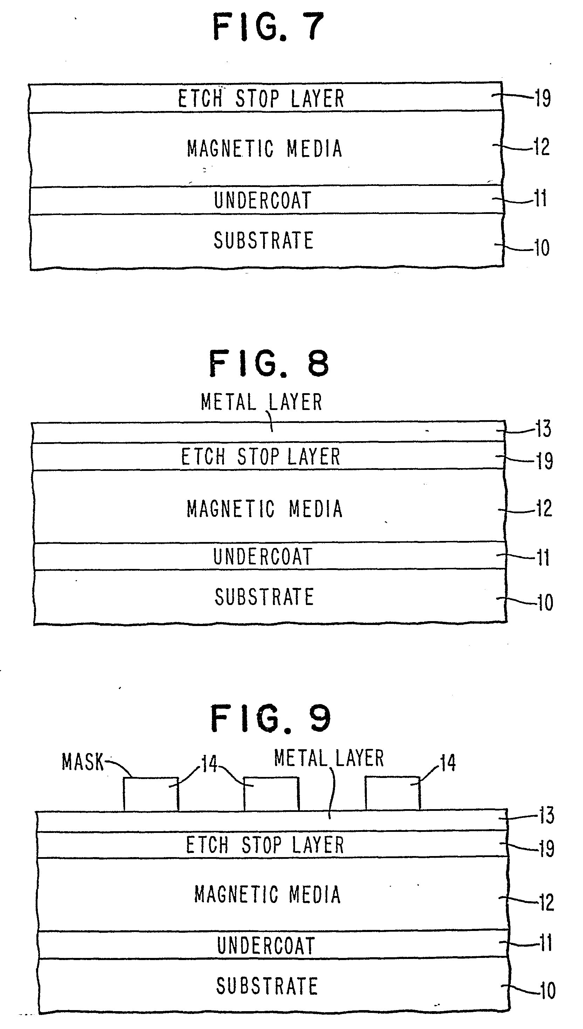

For this reason, either care is taken to assure that the protective layer 13 of Si, a metal such as Al, or a valve metal is not fully etched or an additional layer, called the "stop layer" is deposited prior to the protective layer 13. The purpose of the "stop" layer (see FIGS. 8-12 and 24) is to prevent etching or oxidation of the magnetic media.

A second reason for the stop layer is to reduce the generation of defects in the magnetic media layer 12 from defects in protective layer 13. All deposition processes produce some defects. These defects are to be minimized. Defects which have the nature of missing material (pinholes), for example, missing small portions of protective layer 13, may cause defects in the magnetic media upon subsequent etching or oxidation. The application of the two separate layers, protective layer 13 and the etch-stop layer 19 in FIGS. 7-12 reduces such process-caused, magnetic defects because only defects which occur in both the protective layer 13 and the stop layer 19 at the same location will cause magnetic defects upon etching and oxidation. To the extent that the missing material defects are uncorrelated from layer to layer, the existence of missing material defects in both layers (protective layer 13 and stop layer 19) at the same location is statistically very unlikely. In this case the protective layer 13 can be composed of materials such as Si, Cr, Al or a valve metal, as shown in FIGS. 7-12. Substrate 10, undercoat 11 and magnetic media can be the same as in FIGS. 1-6.

For example perfluorinated hydrocarbons, silicon dioxide, silicon nitride and aluminum oxide or inorganic or organic glasses can be used as "stop" layer 19 for pattern oxidation of a pattern layer of a material selected from the group of materials consisting of Hg, Nb, Ta, and Cr Si, when used with magnetic media 12 composed of a material selected from CrCo, CoP and CoNiP.

If due to process variation and tolerances, the pattern layer is fully oxidized before the oxidation process step is over, the stop layer 19 will prevent oxidation of the magnetic media 12.

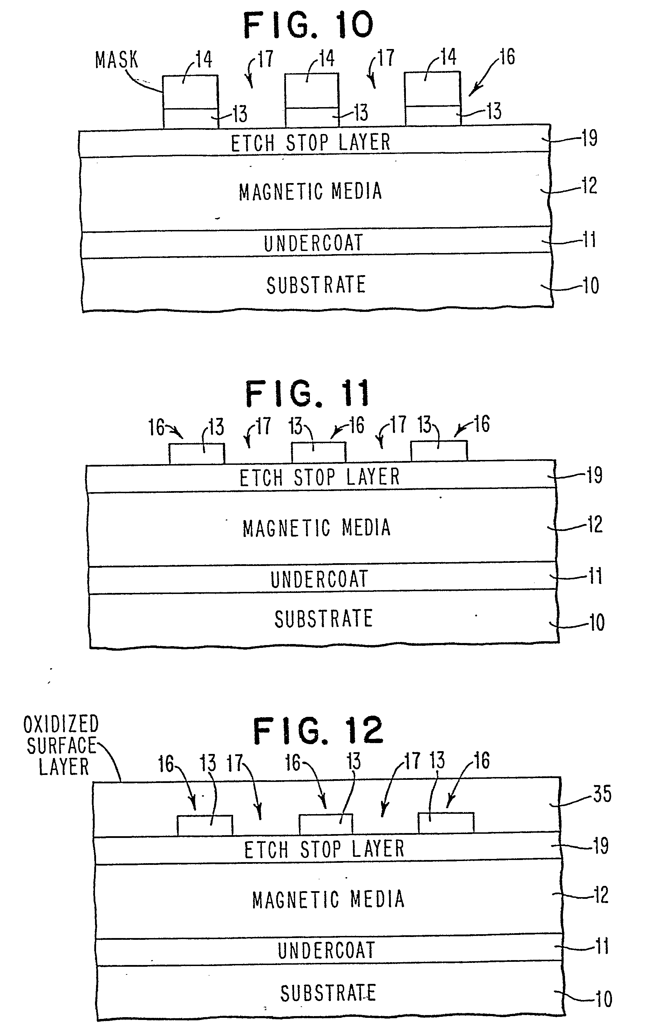

In fact the subsequent final oxidized uniform protection layer 35 in FIG.12 may totally planarize the disk surface. Variation in the electrical impedance due to changes in the relative thickness of the overcoat and protective layers will still provide a capacitive contrast for a servo position signal.

As shown in FIG. 7 which is similar to FIG. 1 in terms of the substrate 10, undercoat layer 11 and magnetic media layer 12. The media layer 12 is also coated in process step 1 with an etch stop layer 19 which will prevent the subsequent etching step from reaching down to the media 12 so that the media will be protected from formation of any modifications which would tend to cause false or erroneous readings. The etch stop layer 19 is composed of a material such as those described above.

FIG. 8 which is analogous to FIG. 2, shows the device of FIG.7 after the protective layer 13 composed of a material such as Si, a metal such as Cr or Al or a valve metal, has been deposited upon the etch stop layer 19.

FIG. 9 is analogous to FIG. 3, with the mask 14 formed on top of protective layer 13.

FIG. 10 is analogous to FIG. 4 with the protective layer 13 being capable of being etched down to the etch stop layer 19 in grooves 17 without any danger of damage to the media layer 12 from the etching operation.

FIG. 11 is analogous to FIG. 5 with the protective layer 13 exposed with the mask layer 14 removed. The encoded markings are separated by grooves 17.

FIG. 12 is analogous to FIG. 6, with the optional uniformly oxidized surface layer 35, which is described in process step (7) above. The surface layer could be a material providing a protective layer such as a solid lubricant or a polymer. One could also deposit an oxide or form an oxidized layer 35.

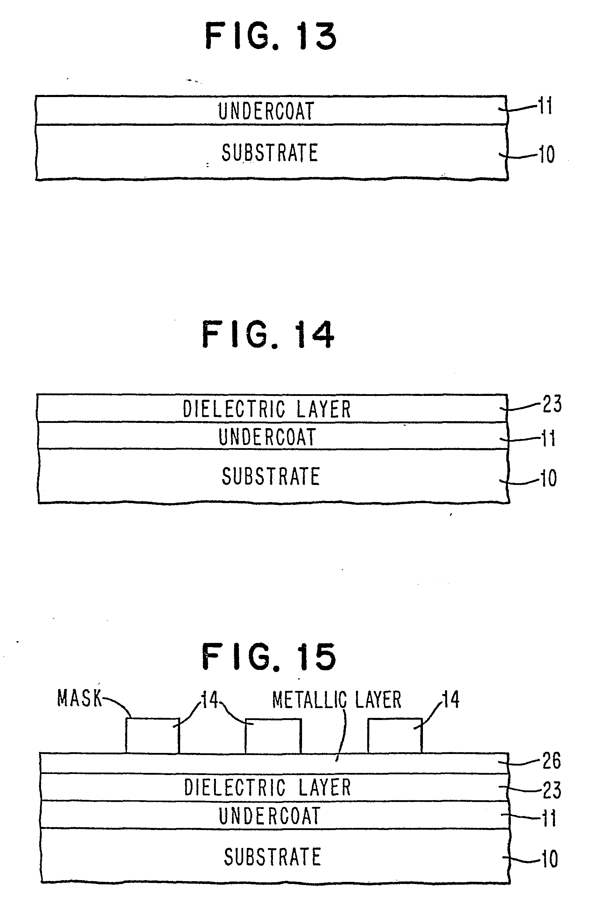

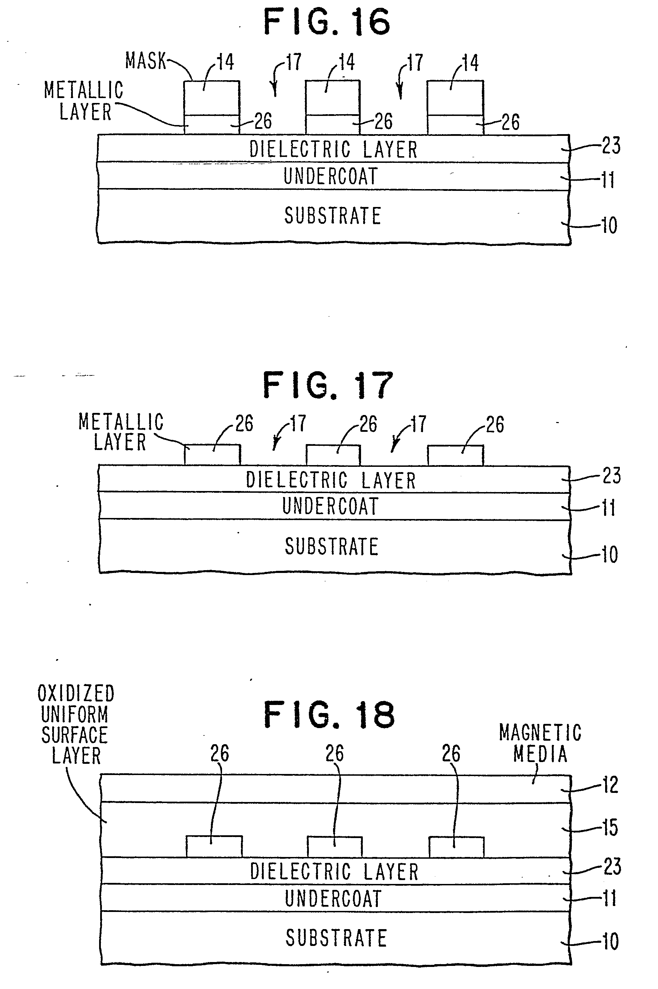

FIGS. 13-18 are analogous to FIGS. 1-6 with the exception that the magnetic media material 12 has been deposited upon the structure in the last step (FIG.18) with the capacitive pattern (26) formed below the magnetic media layer 12.

In FIG. 13, a substrate 10 is show coated with an undercoat 11 as above.

In FIG. 14, a dielectric layer 23 is deposited upon the undercoat 11.

In FIG. 15, an ultra-thin (less than about 1,000 Angstroms thick) metallic layer 26 is deposited on dielectric layer 23. Then in a subsequent step, the metallic layer 26 has a patterned mask 14 formed on top of it.

In FIG. 16, the metallic layer 26 has been formed into an ultra-thin pattern by etching to form coded pattern elements.

In FIG. 17, the mask 14 is removed, leaving the coded pattern elements of metallic layer 26 exposed completely.

In FIG. 18, the patterned metallic layer 26 is buried under an oxidized uniform surface layer 15, which in turn is coated with the magnetic media 12.

Referring in particular to FIG. 18, the undercoat layer 11 is adapted to provide smoothing. Layer 23 is a nonmetallic dielectric layer. Layer 12, comprising the magnetic media can be metallic if thin enough to provide sufficient modulation in the surface of the disk to be detected. However, the surface roughness provided by the buried pattern elements 26 is slight enough to be almost undetectable with a profilometer.

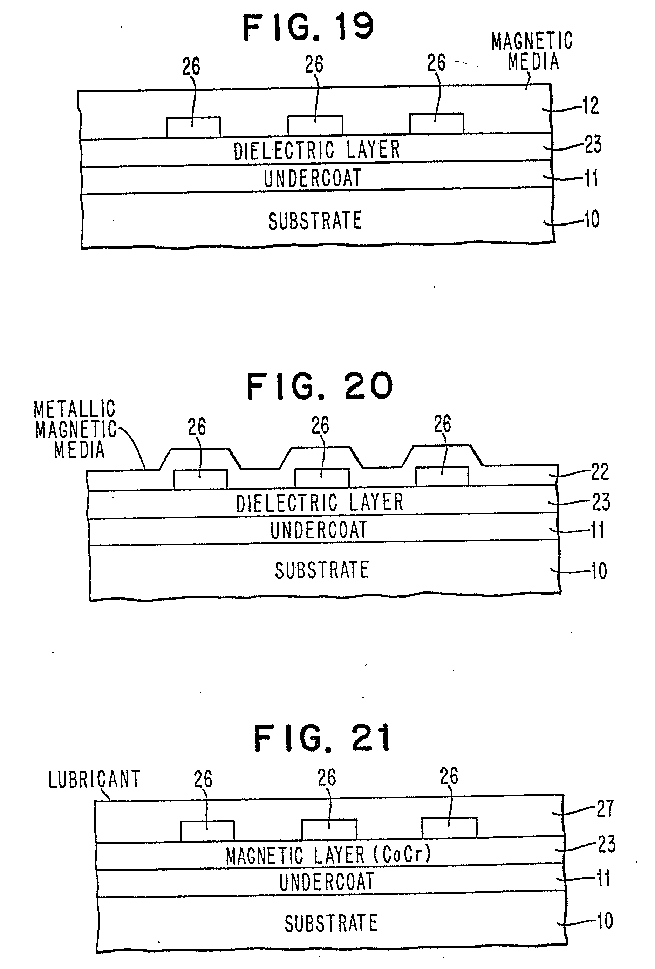

FIG. 19 shows another version of a buried metallic track 26 of FIGS. 7-12 (of coded pattern elements) under the magnetic media 12. Layers 12 and 26 are deposited upon a three layer structure comprising substrate 10, a metallic undercoat 11, and a dielectric layer 23. The relative thickness of magnetic media 12 to buried elements 26 is such that the surface roughness provided by buried elements 26 is almost undetectable by a profilometer, but still detectable by the capacitive servo sensor in the magnetic recording system.

FIG. 20 is similar to FIG. 19 except that the thinness of the metallic magnetic media 22 on top of the disk is on the same order of magnitude as the ultra thin buried magnetic track 26 and since it is so thin, it has significant surface topography to be detected by the capacitive sensor in the magnetic recording system. A substrate 10 is coated with metallic undercoat 11, which is coated with dielectric layer 23, which in turn carries the metallic pattern elements 26 which provide servo patterns. The servo patterns 26 are coated with an ultra thin film of metallic magnetic media 22 (thinner than about 2000 Angstroms.)

FIG. 21 is similar to FIG. 6 or FIG. 12 except that planarization of the top surface is provided by a film of lubricant 27. Substrate 10 is coated with metallic undercoat 11 which is coated with magnetic layer 23 of CoCr. On top of layer 23 are chromium marking patterns 26 which are coated with lubricant 27. The lubricant 27 is planarized and thick enough to smooth over the encoded marking patterns 26. The lubricant 27 can be either viscous or solid. Suitable lubricant materials 27 include sputtered carbon, fluorocarbon layers, and materials such as those described in Linder et al, "ESCA Determination of Fluorocarbon Lubricant Film Thickness on Magnetic Disk Media" IEEE Transactions on Magnetics Vol. MAG-18, No. 6, 1073-1076, (Nov. 1982); and V. Au-Yeung "FTIR Determination of Fluorocarbon Lubricant Film Thickness on Magnetic Disk Media", IEEE Transactions on Magnetics, Vol. MAG-19, No.5, 1662-1664) (Sep.1983).

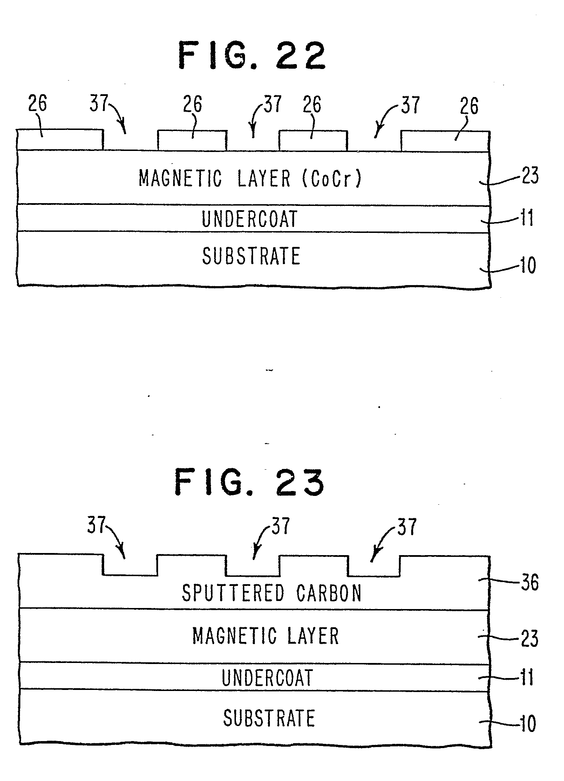

FIG. 22 shows a variation of the disk structure shown in FIG. 21, with the thick upper protection layer of chromium 26 being patterned in reverse with sputter-etched depressions 37, with no coating on top, with the very thin layer of chromium 26 not being planarized. A nonplanarized surface such as this provides better adhesion of a liquid lubricant, in that it reduces spin-off caused by inertial forces during rotation (centrifugal effect) and air shear forces.

FIG. 23 shows a modification of FIG.22, with the substrate 10, metallic undercoat 11, magnetic layer 23, and a dielectric layer 36 of silicon dioxide, $Si_3N_4$ , or sputtered carbon which is patterned by etched depressions 37, which can be only 200-400 Angstroms deep.

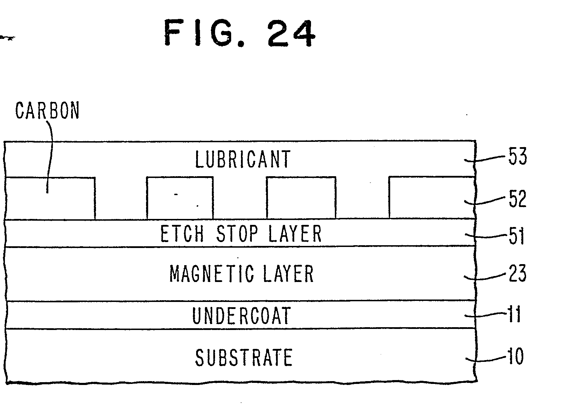

FIG. 24 shows a modification of FIG.23, with the substrate 10, metallic undercoat 11, magnetic layer 23, and an etch stop layer 51 (composed of an etch stop material described above) covered by a pattern of coded indicia marked by sputtered carbon markings 52, which are covered by a lubricant layer 53 which planarizes the structure.

In the worst case, the effective magnetic flying height is increased by the depth of modulation. That is, if 0.02 micrometers of additional patterned rhodium protective metal were added to the protective layer which is a continuous layer 700 Angstroms thick, the magnetic flying height is increased by perhaps 200 Angstroms , i.e. 0.02 micrometers. Smaller modulation depths can be sensed but are more prone to damage because of wear.

Capacitive contrast caused by patterns buried beneath a protective layer are less susceptible to wear because the protective layer is worn, rather than the patterned layer and hence the capacitive signal will remain at the original contrast level.

We have detected capacitive signals from a 0.025 micrometers thick metallic servo pattern formed on a 0.5 micrometer thick dielectric particulate magnetic medium with a relative permitivity or dielectric constant (epsilon greater than 10) for the dielectric particulate medium with a 42 db Signal-to-Noise (S/N) ratio.

Also, we have detected capacitive signals from a 0.025 micrometer aluminum pattern that was deposited by evaporation onto a CoCr magnetic medium on an NiP underlayer on an AlMg disk. The detected S/N ratio was 46 db.

In the case of a CoCr disk, a 0.02 micrometer layer of Cr is deposited additively, using a lift-off technique on the Co Cr surface of the disk. Alternatively, the nonmagnetic thin layer of Cr, or nonmagnetic CoCr metallic film is sputter-etched or chemically-etched 0.02 or 0.03 micrometers deep into the metallic layer. To protect the metallic pattern from wear, the metallic pattern is overcoated by a thin lubricant layer, and or by a thin dielectric layer of $SiO_2$ , $SiO_3N_4$, $Al_2O_3$, Rh, and carbon, etc. or combinations thereof. When deposited by sputtering, this layer permits a small amount of levelling and decreases and protects the sharp edges of the metallic pattern. In summary, capacitive servo control data is stored on a metallic magnetic disk with minimal impact on the magnetic recording medium and the air bearing surfaces.

Several potential processes have been identified for fabrication of capacitive servo tracks with 200 to about 1000 Angstroms thick aluminum.

They include

1. Chemical etching (acceptable only for very thin films and large geometry with a suitably selective chemical etchant which does not attack the layer underneath chemically;)

2. Lift-off (acceptable for small geometry but with lithography being more demanding;)

3. Dry anodization and plasma-assisted anodization; and

4. Wet anodization.

The servo track is coated with a few hundred Angstroms of aluminum, to which resist is applied. Then the track pattern is exposed and developed. Next wet chemical etching is employed to etch the servo pattern in the aluminum. Alternatively if the aluminum is thin and the developing solution is strongly alkaline as in the case of a developer for azide type resist, it is possible to simultaneously develop the resist pattern and to etch the aluminum. Since the dimension of the temporarily used pattern elements will be in the range of several hundred microns, wet etching will give acceptable results.

Metallization can be deposited in an evaporator, but sputter deposition is preferable since the evaporation sources are prone to ejecting relatively large molten particles which would cause the formation of spikes or asperities on the disk surface which is clearly unacceptable.

Aqueous or organic solution anodization of aluminum is useful for the purpose of forming planar structures in which case instead of removing the aluminum metal, aluminum is locally converted to aluminum oxide.

A spinner was employed to apply photoresist to a 35,5 cm diameter disk with a special fixture adapted to minimize the risk of damage to the disk during processing. A vacuum frame was required to hold down the mask during exposure and a quartz halogen lamp was used for resist exposure. The etchant and the solvents used for wet chemical processing did not adversely affect the magnetic coating on the disk. The chemical used was an aqueous solution of KOH or NaOH.

LIFT-OFF

Aluminum pads about 50 micrometers by 15 micrometers in length and width and 600 Angstroms in thickness were fabricated by the lift-off process on 2,5 cm square coupons of AlMg disk coated with polyimide polymer or gamma-ferric oxide. Scanning electron micrographs show that the edges of the pads are more sharply defined by the lift-off process than by chemical etching. The surface of the Al pad on the magnetic material is rougher than that of polyimide, due to the roughness of the magnetic undercoating. This roughness however does not interfere with the level of capacitive signal or the S/N Ratio.

Coupons of AlMg disk coated with polyimide or gamma ferric oxide were coated with 600 Angstroms of Al, which was then coated with resist. The coupons were then anodized in an 8% aqueous solution of oxalic acid until current ceased to flow. The resist was removed and the coupons were heated at 200 degrees C. to convert the anodic hydrated oxide to aluminum oxide.

CLAIMS

1. A data recording medium for use in a data recording system, said medium being adapted for use with a servo system for following a track on said medium, comprising, a substrate, a data recording layer on said substrate, an additional layer above or below said data recording layer, said additional layer having a patterned variable thickness, said patterned variable thickness representing a variation in electromagnetic properties comprising a servo pattern for use in a variable electromagnetic property track following servo system, with said pattern being present or replicated upon the upper one of said additional layer or said data recording layer, whereby a variation in an electromagnetic property is presented upon the upper surface of said disk.

2. A data recording medium in accordance with claim 1 including a thin protective layer over said upper surface of said medium.

3. A magnetic recording patterned disk in accordance with claim 1 wherein said patterned material is metallic.

4. A magnetic recording disk in accordance with claim 1 wherein said magnetic recording layer is a metallic thin film layer.

5. A magnetic recording patterned disk in accordance with claim 1 wherein said magnetic recording material is a metallic thin film layer and said patterned material is beneath said magnetic recording material.

6. A magnetic recording disk in accordance with claim 5 wherein said patterned material is metallic.

- 24 -

7. A magnetic recording disk for use in a magnetic disk file having a track-following servo comprisinga substrate, a magnetic recording layer on said substrate, an additional planar layer above said magnetic recording layer, said additional planar layer being composed of at least two alternating materials with different dielectric constants or resistivities representing a variable impedance servo pattern for use in a variable impedance track-following servo system.

8. A magnetic recording medium for use in a magnetic recording system, said medium being adapted for use with a servo system for following a track on said medium, comprising,a substrate, a magnetic recording layer on said substrate, an additional layer on said magnetic recording layer, said additional layer having a patterned variable thickness, said patterned variable thickness representing a capacitive servo pattern for use in a capacitive track following servo system.

9. A magnetic recording disk in accordance with claim 8 including a thin protective layer over said patterned layer.

10. A magnetic recording patterned disk in accordance with claim 8 wherein said patterned material is metallic.

11. A magnetic recording disk in accordance with claim 8 wherein said magnetic recording layer is a metallic thin film layer.

12. A magnetic recording disk in accordance with claim 8 wherein said additional layer comprises aluminum coated with a thin protective layer of aluminum oxide over said patterned layer.

13. A magnetic recording patterned disk in accordance with claim 8 wherein said patterned material comprises silicon and said layer of silicon is coated with silicon dioxide.

14. A magnetic recording disk in accordance with claim 8 wherein said additional layer comprises titanium coated with a thin protective layer of titanium dioxide over said patterned layer.

15. A magnetic recording patterned disk in accordance with claim 8 wherein said patterned material comprises chromium and said layer of chromium is coated with chromium dioxide.

16. A magnetic recording patterned disk in accordance with claim 8 wherein said patterned material comprises a valve metal and said layer of valve metal is coated with the oxide of said valve metal.

17. A magnetic recording disk for use in a magnetic disk file having a track-following servo comprisinga substrate, a magnetic recording layer on said substrate, an additional planar layer on said magnetic recording layer, said additional planar layer being composed of at least two alternating materials with different permitivities or resistivities representing a capacitive servo pattern for use in a capacitive track-following servo system.

18. A magnetic recording disk for use in a magnetic disk file having a magnetic recording medium composed of a metallic material, said medium having on its upper surface a pattern formed or patterned by deposition or etching.

19. A magnetic recording disk in accordance with claim 18 wherein said upper surface is overcoated with a dielectric or metallic material which is also wear resistant.

20. A magnetic recording disk in accordance with claim 18 wherein said metallic layer is coated with a lubricating layer.

21. A magnetic recording disk in accordance with claim 19 wherein said metallic layer is coated with a lubricating layer.

22. A magnetic recording disk in accordance with claim 1 wherein said magnetic recording layer is protected by an etch stop layer.

23. A magnetic recording disk in accordance with claim 7 wherein said magnetic recording layer is protected by an etch stop layer.

24. A magnetic recording disk in accordance with claim 8 wherein said magnetic recording layer is protected by an etch stop layer below said additional layer.

25. A magnetic recording disk in accordance with claim 17 wherein said magnetic recording layer is protected by an etch stop layer located between said magnetic recording layer and said additional planar layer.

26. A magnetic recording patterned disk in accordance with claim 8 wherein said patterned material comprises tantalum and said layer of tantalum is coated with tantalum dioxide.

# FIG. 1

MAGNETIC MEDIA — 12

UNDERCOAT — 11

SUBSTRATE — 10

9

# FIG. 2

PROTECTIVE LAYER — 13

MAGNETIC MEDIA — 12

UNDERCOAT — 11

SUBSTRATE — 10

9

# FIG. 3

MASK — 14 — 14 — 9

PROTECTIVE LAYER — 13

MAGNETIC MEDIA — 12

UNDERCOAT — 11

SUBSTRATE — 10

# FIG. 4

X
Z

MASK — 14 — 17 — 14 — 17 — 14 — 16 — 9

PROTECTIVE
LAYER — 16

13

MAGNETIC MEDIA — 12

UNDERCOAT — 11

SUBSTRATE — 10

# FIG. 5

17 — 17 — 9

PROTECTIVE
LAYER — 40 — 16 — 40 — 16 — 40 — 16 — 40

13

MAGNETIC MEDIA — 12

UNDERCOAT — 11

SUBSTRATE — 10

# FIG. 6

OXIDIZED UNIFORM
SURFACE LAYER

PROTECTIVE — 40 — 16 — 40 — 16 — 40
LAYER

15

13

MAGNETIC MEDIA — 12

UNDERCOAT — 11

SUBSTRATE — 10

# FIG. 7

| | |
|---|---|
| ETCH STOP LAYER | 19 |
| MAGNETIC MEDIA | 12 |
| UNDERCOAT | 11 |
| SUBSTRATE | 10 |

# FIG. 8

METAL LAYER

| | |
|---|---|
| | 13 |
| ETCH STOP LAYER | 19 |
| MAGNETIC MEDIA | 12 |
| UNDERCOAT | 11 |
| SUBSTRATE | 10 |

# FIG. 9

MASK — 14   METAL LAYER   14

| | |
|---|---|
| | 13 |
| ETCH STOP LAYER | 19 |
| MAGNETIC MEDIA | 12 |
| UNDERCOAT | 11 |
| SUBSTRATE | 10 |

## FIG. 10

MASK · 14 · 17 · 14 · 17 · 14 · 16

13 · 13 · 13

ETCH STOP LAYER — 19

MAGNETIC MEDIA — 12

UNDERCOAT — 11

SUBSTRATE — 10

## FIG. 11

16 · 13 · 17 · 13 · 16 · 17 · 13 · 16

ETCH STOP LAYER — 19

MAGNETIC MEDIA — 12

UNDERCOAT — 11

SUBSTRATE — 10

## FIG. 12

OXIDIZED SURFACE LAYER

16 · 13 · 17 · 16 · 13 · 17 · 13 · 16

— 35

ETCH STOP LAYER — 19

MAGNETIC MEDIA — 12

UNDERCOAT — 11

SUBSTRATE — 10

0162349

# FIG. 13

| | |
|---|---|
| UNDERCOAT | 11 |
| SUBSTRATE | 10 |

# FIG. 14

| | |
|---|---|
| DIELECTRIC LAYER | 23 |
| UNDERCOAT | 11 |
| SUBSTRATE | 10 |

# FIG. 15

MASK — 14 — METALLIC LAYER — 14

| | |
|---|---|
| | 26 |
| DIELECTRIC LAYER | 23 |
| UNDERCOAT | 11 |
| SUBSTRATE | 10 |

## FIG. 16

MASK — 14  17  14  17  14

METALLIC LAYER — 26  26  26

DIELECTRIC LAYER — 23
UNDERCOAT — 11
SUBSTRATE — 10

## FIG. 17

METALLIC LAYER — 26  17  26  17  26

DIELECTRIC LAYER — 23
UNDERCOAT — 11
SUBSTRATE — 10

## FIG. 18

OXIDIZED UNIFORM SURFACE LAYER

MAGNETIC MEDIA

26  26  26

— 12
— 15

DIELECTRIC LAYER — 23
UNDERCOAT — 11
SUBSTRATE — 10

## FIG. 19

MAGNETIC MEDIA

26  26  26

— 12

DIELECTRIC LAYER — 23

UNDERCOAT — 11

SUBSTRATE — 10

## FIG. 20

METALLIC MAGNETIC MEDIA

26  26  26

— 22

DIELECTRIC LAYER — 23

UNDERCOAT — 11

SUBSTRATE — 10

## FIG. 21

LUBRICANT  26  26  26

— 27

MAGNETIC LAYER (CoCr) — 23

UNDERCOAT — 11

SUBSTRATE — 10

# FIG. 22

| 26 | 37 | 26 | 37 | 26 | 37 | 26 |

| MAGNETIC LAYER (CoCr) | —23 |
| UNDERCOAT | —11 |
| SUBSTRATE | —10 |

# FIG. 23

| 37 | 37 | 37 |

| SPUTTERED CARBON | —36 |
| MAGNETIC LAYER | —23 |
| UNDERCOAT | —11 |
| SUBSTRATE | —10 |

# FIG. 24

CARBON

| | | | |
|---|---|---|---|
| LUBRICANT | | | —53 |
| | | | —52 |
| ETCH STOP LAYER | | | —51 |
| MAGNETIC LAYER | | | —23 |
| UNDERCOAT | | | —11 |
| SUBSTRATE | | | —10 |